Europäisches Patentamt

European Patent Office

Office européen des brevets

(11) Publication number: **0 181 641**
**B1**

## (12) EUROPEAN PATENT SPECIFICATION

(45) Date of publication of patent specification: **30.08.89**

(51) Int. Cl.⁴: **C 08 G 61/08**

(21) Application number: **85114485.7**

(22) Date of filing: **14.11.85**

(54) Improvements in the polymerization of norbornene-type cycloolefins.

(30) Priority: **16.11.84 US 672390**
**16.11.84 US 672567**

(43) Date of publication of application:
**21.05.86 Bulletin 86/21**

(45) Publication of the grant of the patent:
**30.08.89 Bulletin 89/35**

(84) Designated Contracting States:
**BE DE FR GB IT NL SE**

(56) References cited:
**EP-A-0 002 277**
**EP-A-0 084 888**

(73) Proprietor: **HERCULES INCORPORATED**
**Hercules Plaza**
**Wilmington Delaware 19894 (US)**

(72) Inventor: **Klosiewicsz, Daniel William**
**213 Sheldon Drive Drummond Hill Apts.**
**Newark, Del. 19711 (US)**
Inventor: **Leach, Douglas Robert**
**16 Helios Court**
**Newark, Del. 19711 (US)**

(74) Representative: **Lederer, Franz, Dr. et al**
**Van der Werth, Lederer & Riederer**
**Patentanwälte Lucile-Grahn-Strasse 22**
**D-8000 München 80 (DE)**

EP 0 181 641 B1

Courier Press, Leamington Spa, England.

EP 0 181 641 B1

**Description**

This invention relates to reactive compositions and a process for the bulk polymerization of purified norbornene-type cycloolefins, particularly dicyclopentadiene, with a metathesis - catalyst system, and to thermoset, substantially cross-linked polymeric compositions that include at least 50 percent by weight of polymerized units of dicyclopentadiene.

Unless otherwise specified, the term "norbornene-type" is used herein to refer to cycloolefins having a strained five-membered ring structure, such as that of norbornene or dicyclopentadiene.

U.S. Patent No. 4,400,340 discloses a method for making a thermoset cross-linked poly(dicyclopentadiene) by a reaction injection molding (sometimes hereinafter referred to as RIM) process and using a metathesis - catalyst system. The RIM process involves the mixing of two or more low viscosity reactive streams, which are then injected into a mold where they quickly set up into a solid infusible mass.

The patent discloses one reactant stream containing the catalyst of the metathesis-catalyst system, such as a tungsten halide or tungsten oxyhalide, and another reactant stream containing the activator (cocatalyst) of the metathesis-catalyst system, such as an alkylaluminum halide, at least one reactant stream containing dicyclopentadiene. The tungsten-containing catalyst is preferably $WCl_6$ or $WOCl_4$. The alkylaluminum compound can be a trialkylaluminum, an alkylaluminum dihalide or a dialkylaluminum halide, in which the alkyl group contains one to ten carbon atoms, or a mixture thereof.

Other U.S. Patents that disclose the use of a two-part metathesis-catalyst to produce thermoset dicyclopentadiene homopolymer and copolymers of dicyclopentadiene with cyclopentene, having high impact strength and high modulus, are 4,436,858, 4,469,809, 4,481,344, and 4,485,208. The thermoset polymeric products are insoluble in common solvents such as gasoline, naphtha, chlorinated hydrocarbons, and aromatics, and have a low tendency to flow at elevated temperatures.

U.S. Patent 4,002,815 discloses a solution-polymerization method that employs a dialkylaluminum iodide, an alkylaluminum diiodide or a mixture of trialkylaluminum compounds with elemental iodine to make copolymers of cyclopentene and dicyclopentadiene that are soluble in common solvents such as those mentioned above. That patent also discloses that other aluminum alkyls such as trialkylaluminums used without iodine, and dialkylaluminum halides are unsuitable for making the copolymers.

U.S. Patent 4,426,502 discloses a bulk polymerization process for cyclic olefins containing the norbornene group, by a process using a metathesis-catalyst system in a reactive mixture or reaction injection molding system. Modification of the cocatalyst with an alkoxy group to extend the polymerization time is also disclosed.

U.S. Patent 4,458,037 is another disclosure of dialkylaluminum iodides, such as diethylaluminum iodide, as catalyst activators. The activator may also be an alkylaluminum diodide, or a mixture of trialkylaluminum compounds with elemental iodine. This patent also discloses a method for making a cellular cross-linked thermoset polymer containing units of dicyclopentadiene. According to that method, at least one of two reactant streams contains a blowing agent, and the mixture is heated to a temperature in the range of about 30°C to about 80°C.

The same patent discloses that the use of a two-component olefin metathesis catalyst consisting of a tungsten oxyhalide or halide such as tungsten hexachloride and a dialkylaluminum iodide for the polymerization of dicyclopentadiene results in a polymerization in which premature gelation, due to cross-linking prior to the exothermic polymerization, is kept low enough to allow uniform expansion to a cellular polymer.

The tungsten-containing catalyst used in these known metathesis-catalyst polymerizations is preferably in solution with dicyclopentadiene monomer. Because the tungsten compound, if unmodified, will rapidly polymerize the monomer, the tungsten compound should first be suspended in a small amount of a suitable solvent. The solvent must not react with the tungsten compound. For instance, where a tungsten halide is employed the solvent must not be susceptible to halogenation. Examples of preferred solvents are benzene, toluene, xylene, chlorobenzene, dichlorobenzene, and trichlorobenzene. Sufficient solvent should be added so that the tungsten compound concentration is between about 0.1 and 1.0 mole per liter of solution.

In these known processes the tungsten compound is solubilized by the addition of a small amount of an alcoholic or phenolic compound. Suitable examples of the preferred phenolic compounds are phenol, alkyl phenols, and halogenated phenols, with tert-butyl phenol, tert-octyl phenol and nonyl phenol being most preferred. The preferred molar ratio of tungsten compound/phenolic compound is from about 1:1 to about 1:3. The solution can be made by adding the phenolic compound to a slurry of the tungsten compound in an organic solvent, stirring the solution and then blowing a stream of a dry inert gas through the solution to remove any hydrogen chloride. Alternatively, a phenolic salt, such as a lithium or sodium phenoxide, can be added to a slurry of the tungsten compound in an organic liquid, the mixture stirred until essentially all the tungsten compound is dissolved, and the precipitated inorganic salt removed by filtration or centrifugation. All of these steps should be carried out in the absence of moisture and air to prevent deactivation of the catalyst.

The activator also is preferably in solution with dicyclopentadiene monomer.

Dicyclopentadiene that is commercially available is *endo*-DCPD (3a,4,7,7a tetrahydro - 4,7 - methanolH - indene). The *exo*-isomer, while not commercially available, can be used just as well. The

2

highest purity in the commercial grade of monomer, 97% by weight dicyclopentadiene, is unacceptable for polymerization without purification, and should be purified in order to prevent impurities from inhibiting the polymerization. At least the low boiling fraction should be removed. This can be done by stripping away several percent of the unsaturated four to six carbon atom volatiles, i.e., the volatiles distilled below 100°C at about 90±3 torr absolute pressure. It is often desirable to purify the starting material even further by treatment with an absorbent such as molecular sieves, alumina, or silica gel. Because the presence of water interferes with polymerization (by hydrolysis of both the catalyst and the activator components of the catalyst system), the water content of the starting material should be below about 100 ppm. Water can be removed by azeotropic distillation under reduced pressure.

To prevent premature polymerization of the tungsten compound/monomer solutions used in these known metathesis-catalyst systems (which would otherwise occur within a matter of hours), from about 1 to about 5 moles of a Lewis base or a chelating agent can be added per mole of tungsten compound. Preferred chelating agents include acetylacetones and alkyl acetoacetates in which the alkyl group contains from one to ten carbon atoms. Preferred Lewis bases are nitriles and ethers such as benzonitrile and tetrahydrofuran. The improvement in the stability and shelf-life of the tungsten compound solution is obtained whether the complexing agent is added before or after the phenolic compound. When purified norbornene-type cycloolefin, for example dicyclopentadiene, is added to this catalyst solution it forms a solution that is stable and has a shelf-life of several months.

In these known metathesis-catalyst systems, the induction time is the period of time between mixing of catalyst, activator and monomer, and the exotherm that indicates the onset of exothermic polymerization. If an unmodified activator/monomer solution is mixed with the catalyst/monomer solution, the polymerization will initiate spontaneously and instantaneously, causing the polymer to set up in the mixing head. The onset of polymerization is delayed by adding a reaction rate moderator to the activator/monomer solution. Ethers, esters, ketones, and nitriles can act as moderators for the alkylaluminum compounds. The induction time is controlled by varying the amount of rate moderator used. In these known systems, the preferred ratio of the alkylaluminum to moderator is from about 1:1.5 to about 1:5 on a molar basis.

The induction time is also temperature dependent. As the temperature at which the reaction is carried out is increased the induction time will decrease. Consequently, to keep the induction time controlled at a higher reaction temperature a less active formulation of the metathesis catalyst system should be used, for instance, by selecting the proper amount of an appropriate modifier.

Not only is it desirable that the thermoset polymer have high impact strength, but it is also desirable that it be easily synthesized and formed. The reaction injection molding process achieves this second goal by in-mold polymerization. For a RIM system to be of use with a particular polymer, certain requirements must be met: 1) the individual streams must be stable and must have a reasonable shelf-life under ambient conditions; 2) it must be possible to mix the streams thoroughly without premature gelling or setting up in the mixing head; 3) when injected into the mold, the materials must set up to a solid system rapidly; and 4) any additives—fillers, stabilizers, pigments, etc.—must be added before the material sets up. The additives selected must not interfere with the polymerization reaction.

Possible additives disclosed in prior publications include fillers, pigments, antioxidants, light stabilizers, plasticizers and polymeric modifiers. For instance, U.S. Patent No. 4,436,858 already referred to describes the use of plasticizers. It is often desirable for the additives to be combined with one or both of the catalyst system's streams before being injected into the mold. Reinforcing materials can also be charged to the mold cavity, prior to charging the reaction streams, if the fillers are such that the reaction stream can readily flow around them to fill the remaining void space in the mold. It is essential that the additives do not adversely affect catalytic activity.

It is known that reinforcing agents or fillers such as milled glass, wollastonite, mica, carbon black, talc, and calcium carbonate, can increase the polymer's flexural modulus with only a small sacrifice in impact resistance and without appreciably adversely affecting the polymerization rate, as shown by Examples 26 to 33 in U.S. Patent No. 4,400,340. From about 0% to 75% by weight of additives can be incorporated.

The published patents, particularly the previously-mentioned U.S. Patent No. 4,400,340, disclose that when the catalyst system's components are combined, the resulting ratio of cycloolefin (for example dicyclopentadiene) to tungsten compound should be from about 500:1 to about 15,000:1 on a molar basis, preferably 2,000:1, and the dicyclopentadiene to alkylaluminum ratio should be from about 100:1 to about 2000:1 on a molar basis, preferably about 200:1 to about 500:1.

In a preferred combination according to the published patents, sufficient dicyclopentadiene is added to a 0.5 molar tungsten containing catalyst solution prepared as described above, so that the final tungsten compound concentration is 0.007 molar. This corresponds to a dicyclopentadiene to tungsten compound ratio of 1000:1. Sufficient dicyclopentadiene is added to the diethylaluminum chloride (Et$_2$AlCl) solution, prepared as described above, to produce an alkylaluminum concentration of 0.048 M. This corresponds to a dicyclopentadiene to alkylaluminum ratio of 150:1. If these two streams are mixed in a 1:1 ratio, the final ratio of dicyclopentadiene to tungsten compound will be 2000:1, the final ratio of dicyclopentadiene to alkylaluminum will be 300:1 and the final ratio of tungsten compound to alkylaluminum will be about 1:7.

The illustrated combination is not disclosed as the lowest catalyst level at which moldings can be made, but it is stated to be a practical level that provides for excess catalyst if impurities in the system consume some of the catalyst components. U.S. Patent No. 4,400,340 points out that a higher alkylaluminum level will not only increase costs and residual chlorine levels but may result in a less satisfactory cure. A wide range of alkylaluminum activator to tungsten catalyst formulations are disclosed that are said to produce substantially cross-linked polymer products that have good properties such as tear resistance, stiffness, residual odor, and surface properties.

It is known (for instance from the disclosure of U.S. Patent 4,481,344) that the normal residual monomer content of thermoset dicyclopentadiene homopolymer by known two-part metathesis-catalyst processes has seriously limited its commercial applications.

One way to reduce the normal residual monomer content is disclosed in 4,481,344, which proposed adding to one of the RIM reactant streams a halogen-containing hydrocarbyl additive.

It would be desirable to provide means to control the polymerization reaction to promote chain formation initially, and thus to reduce the premature occurrence of cross-linking and consequent gelation of the monomer prior to the exotherm that accompanies the conversion of monomer into polymer. In a RIM process, such early gelling interferes with the essential rapid flow of the reactive composition into the mold, interferes with the uniformity of cross-linking, and promotes the formation of air bubbles in the molded product. In the preparation of cellular polymers, it inhibits uniform formation of foam in the polymer.

None of the known processes provide information that would identify for the operator the factors in the polymerization reaction that retard the premature occurrence of cross-linking.

Prior publications merely indicate, as indicated above, that an adequate level of excess catalyst for monomer conversion is provided by maintaining the final molar ratio of the tungsten compound to the alkylaluminum compound at about 1:7, (or the molar ratio of the alkylaluminum compound to the tungsten compound at about 7:1).

According to the invention, a process for polymerizing norbornene-type cycloolefins using a monomer-soluble or solvent-soluble tungsten-compound catalyst and an alkylaluminum compound as the activator in a metathesis - catalyst system, is characterized in that the activator comprises two parts, a trialkylaluminum compound or a dialkylaluminum chloride, as the first part, and a dialkylaluminum iodide as the second part, whereby the chain formation is selectively promoted until the exothermic heat of polymerization causes cross-linking to proceed.

In the process according to the invention, the occurrence of cross-linking is postponed to the most desirable stage in the polymerization. The result is more effective mixing, more rapid transfer into the mold, inhibition of bubble-formation, and a more uniformly cross-linked polymer.

For cellular polymers, the process according to the invention can be used with a blowing agent to produce more uniform cellular polymers that form a more highly cross-linked structure after their expansion than the polymers disclosed in U.S. Patent 4,458,037, and that have more desirable end properties such as creep resistance and compressive strength.

Preferably, the three parts of the olefin metathesis catalyst system, that is, the two types of activator and the transition metal catalyst, plus the monomer, form the basis of a reactant composition, which may take the form of the two separate reactive streams that are normally mixed in the mixing head of a reaction injection molding machine and then injected into a mold where they will set up into a solid insoluble cross-linked polymer.

Preferably also, the molar ratio of alkylaluminum (based on the total aluminum content) to tungsten compound is from about 2:1 to 2.75:1, although satisfactory control of premature cross-linking may be achieved at a molar ratio of 2:1 to 4:1 if the preferred activators as indicated above are used; the preferred ratio is then 3:1.

It would be desirable to provide means to produce, without the need for an additional ingredient, cross-linked polymeric norbornene-type cycloolefin compositions that contain a relatively small amount of residual monomer. Thus also according to the invention, the process for polymerizing norbornene type cycloolefins using a tungsten-compound catalyst and dialkylaluminum chloride activator in a metathesis-catalyst system to produce low-residual-monomer polymer products, is characterized in that the molar ratio of alkylaluminum, based on the total aluminum content of the two-part activator, to tungsten is from about 2:1 to 4:1.

If the preferred two-part activator combinations are not used, or a single activator is used, the preferred activator-to-catalyst ratio is from about 2:1 to about 2.75:1 to produce about 0.3 to 1.5 percent by weight of residual monomer. With the two-part activator, the ratios happen to correspond closely to the catalyst-to-activator ratios used to control premature gelation, so that gelation control with a two-part activator also reduces residual monomer.

In a preferred embodiment of the present invention more than 99,7 percent of the cycloolefin is polymerized, whereby the product contains less than 0.3 percent of residual monomer.

Preferably, the process according to the invention using an activator-to-catalyst ratio from about 2:1 to about 4:1 to produce low-residual-monomer polymer products is characterized in that the reactive composition contains milled glass fibers that are about 1.6 mm to 3.2 mm (1/16 in to 1/8 in) in size (referred to as "1/8 inch milled glass fibers"), Wollastonite particles that are sold under the trade mark NYAD G by Nyco Company and that are 0.0035 mm by 0.7 mm (3.5 by 70 microns) in size, or particles, about 3.2 mm in size, of high-molecular-weight polyethylene such as "Hi-fax 1900" made by Himont Incorporated.

Such fine particles of a material that is inert to the polymerization of the cycloolefin, selected from the class of fillers commonly used to improve the physical properties of polymers, and referred to as "heat sink material", are believed to act as a "heat sink" that absorbs the heat of polymerization and lowers the peak reaction temperature. The effect is to extend the active life of the catalyst, so that a smaller amount of residual monomer is left.

An effective amount of heat sink material in the reactive composition may be for example, 10 to 20% by weight of the "1/8 inch milled glass fibers", the Wollastonite particles or the particles of high-molecular-weight polyethylene. They are combined with one or both of the catalyst system's streams before it is injected into the mold.

Such material, used with an activator-to-catalyst ratio of about 3:1, will reduce the amount of residual monomer to between 0.43 and 1.81% by weight. As the proportion of residual monomer decreases, the properties of the product improve; in particular, the latent odor decreases to a level lower than that perceptible by smell for most human beings.

As used herein, unless otherwise specified, percentage of materials are in percent by weight and "solvent" means a fluid in which the monomer or catalyst is readily soluble.

A preferred reactant activator solution is comprised of dicyclopentadiene; a trialkylaluminum compound and a dialkylaluminum iodide in both of which each alkyl, straight-chained or branched, contains from 5 to 10 carbon atoms, the alkylaluminum compounds together being present in a dicyclopentadiene - to - alkylaluminum molar ratio of about 80:1 to about 1300:1, more preferably about 200:1 to about 800:1; and bis(2 - methoxyethyl) ether in a alkylaluminum - to - bis(2 - methoxyethyl)ether molar ratio of at least 1:0.5, more preferably about 1:1 to about 1:4.

The ratio of the trialkylaluminum compound to the dialkylaluminum iodide is from about 1.5:1 to about 6:1. The first part of the two-part activator is preferably trioctylaluminum or dioctylaluminum chloride, most preferably tri - n - octylaluminum, and the dialkylaluminum iodide is preferably dioctylaluminum iodide.

For maximum effectiveness, the bis(2-methoxyethyl) ether is added to the monomer or combination of monomers before the trialkylaluminum is added.

The preferred catalyst composition is prepared by controlled addition of an oxygen donor to $WCl_6$, and is a mixture of from about 10 to 75 mole percent $WOCl_4$ and about 25 to 90 mole percent $WCl_6$. The oxygen donor can be wet $N_2$ gas, a hydrated inorganic salt, such as $FeSO_4 \cdot 7H_2O$ or an alkyl alcohol such as is t-butanol. The preferred proportion of oxygen donor is about 0.5 mole per mole of tungsten.

In a preferred embodiment a gaseous mixture of carrier gas such as nitrogen containing water vapor as an oxygen donor is added to a stirred mixture of $WCl_6$ catalyst precursor in solvent such as toluene under an inert atmosphere. The gaseous mixture of carrier gas and water vapor is carried to a point beneath or slightly above the solvent surface in the mixing vessel from a container of the solvent and water into which is introduced dry carrier gas. By proportioning the amount of water to the amount of catalyst precursor, oxygen addition from the water to the catalyst precursor to form the product is controlled. The amount of water initially in the feed container is in proportion to the amount of catalyst precursor in the mixing vessel. The molar ratio of water to $WCl_6$ catalyst precursor is preferably from 0.25 to 0.75. Inactivation of catalyst product may occur if overexposure to water vapor is permitted. Therefore, it is necessary to carefully control the reaction to minimize the formation of these byproducts.

A phenolic compound and acetylacetone (acac) are added to solubilize and stabilize respectively the system in cycloolefin. Catalyst prepared in this fashion is effective in polymerization of norbornene-type cycloolefins such as DCPD at a cycloolefin to catalyst ratio of as high as 14000:1.

The reactant solution may additionally contain up to about 20% of one or more other metathesis-polymerizable, norbornene-type cycloolefin comonomers.

Preferably, the cycloolefin reactive composition used in the process according to the invention includes at least 50 percent by weight of DCPD and more preferably 80 percent by weight. Most preferably, and particularly in the formation of molded noncellular solid polymer, the polymerization mixture is about 88 to 98 percent polycyclic olefin monomer, on a blowing-agent-free basis. Preferably also, the polymerization solution is up to about 10 percent elastomer, based on the weight of the monomer or combination of monomers.

The addition of the elastomer increases the viscosity of the reactant solution and improves the impact resistance of a final thermoset polymeric product. The amount of elastomer is added to a stirred mixture of $WCl_6$ catalyst precursor in solvent such as toluene under an inert atmosphere. The gas is preferably from about 3 to about 10 percent, based on the weight of the monomer or combination of monomers. Illustrative elastomers include natural rubber, butyl rubber, polyisoprene, polybutadiene, polyisobutylene, ethylene - propylene copolymer, styrene - butadiene - styrene triblock rubber, random styrene - butadiene rubber, styrene - isoprene - styrene triblock rubber, and ethylenepropylenediene terpolymers.

The product density of the compositions may vary from about 1.2 g/ml with some filler to about 0.04 g/ml.

Since polymerized dicyclopentadiene contains carbon-carbon unsaturation it may be subject to oxidation. The product can be protected by the incorporation of as much as about 2.0 per cent by weight of a phenolic or amine antioxidant. Preferred antioxidants include 2,6 - di - tert - butyl - p - cresol, N,N' - diphenyl - p - phenylene diamine and tetrakis methylene(3,5 - di - t - butyl - 4 - hydroxy cinnamate)] methane. While the anitoxidant can be added to either or both streams, incorporation into the catalyst/monomer stream is preferred.

A blowing agent may be incorporated into the reactive streams if a product having a cellular structure is to be formed. Any of the conventional blowing agents used in reaction injection molding processes or related processes may be employed, provided that the blowing agent does not poison or otherwise adversely affect the metathesis catalyst. Preferred blowing agents include low boiling organic compounds, i.e., compounds which are liquids under ambient conditions but which are volatilized under polymerization conditions, and inert gases. Representative low boiling organic compounds include hydrocarbons such as pentane and hexane, and halogenated hydrocarbons such as methylene chloride, trichlorofluoromethane and 1,1,2 - trichloro - 1,2,2 - trifluoroethane. Representative inert gases include nitrogen, argon and fluorinated hydrocarbons, such as dichloro - difluoromethane and 1,2 - dichloro - 1,1,2,2 - tetra-fluorethane.

The blowing agent may be incorporated into either or both reactive streams, or it may be added to a separate monomer stream. The amount of blowing agent to be incorporated is from about 2 to about 30, preferably from about 4 to about 20, per cent by weight based on the weight of the monomer. The greater the amount of blowing agent used the less dense the final cellular cross-linked polymer produced.

The cellular cross-linked polymer of this invention may be made and molded by RIM or related processes. The two parts of the metathesis-catalyst system can be separately mixed with monomer and blowing agent to form two suitable solutions, which are placed in separate vessels. These vessels provide the source for separate streams. The two streams are combined in one place, such as the mixing head of a RIM machine, and then injected into a mold where polymerization takes place.

A foam stabilizing agent such as a surfactant may be added to make the bubbles smaller and more uniform in size. This generally also results in the formation of foams in which a higher percentage of the cells are closed than in embodiments which do not contain a foam stabilizing agent. Having the bubbles small and of uniform size generally results in improved properties such as flex modulus, impact resistance and compressive strength for the foam. Having a higher amount of closed cells is preferred for a number of applications such as insulation.

Fluorinated alkyl methacrylate copolymers, such as the fluorinated alkyl methacrylate copolymer surfactants sold by Minnesota Mining and Manufacturing Company under the trade names FC-740 and FC-432, may be used as foam stabilizers to produce foams with well dispersed small bubbles of uniform size. Other similar surfactants composed of fluorinated copolymers of alkyl methacrylates are also effective. The molecular weight of the polymeric surfactant appears not to have an effect on its foam stabilizing ability so that the only limit on molecular weight would be that it not be so high as to require unduly large amounts of inert solvent as a diluent.

In addition, the solvent that the surfactant is dissolved in should not interfere with or inhibit the polymerization. The amount of surfactant added should be from about 0.1% to about 1.0% of the amount of dicyclopentadiene monomer. The surfactant may be added to either the catalyst and monomer stream or the activator and monomer stream. Since the surfactant causes the monomer streams to foam under agitation, and thus have a lower density, it is preferably added to both streams so that they will have the same density.

Surfactants such as graft or block copolymers of polysilicones and polyethers commonly used in the preparation of polyurethane foams, and a number of other common surfactants such as glyceryl dioleate, polyoxyethylated tert - octylphenol, polyethyleneglycol 300 dilaurate, sodium n - octyl - sulfate, alkyltrimethylammonium salts, polysorbates, alkanolamides, and perfluoroalkylpolyethers, are ineffective as foam stabilizers in the process according to the invention.

The following examples 1—8 illustrate obtaining low residual monomer in poly DCPD by adding a filler/heat sink to the monomer before the polymerization in the process according to the invention.

Example 1

Preparation of tungsten catalyst solution. (The catalyst composition is described in detail in the EP 85.114486.5) (EP—A—0 181 642)) 0.0375 Moles of $WCl_6$ and 0.0125 moles of $WOCl_4$ are weighed into a pop bottle equipped with a magnetic stir bar in a glove box, after which the bottle is capped and removed. Nonyl phenol (11.05 grams, 0.050 moles) is weighed into a pop bottle which is then capped and sparged with nitrogen, after which the nonyl phenol is dissolved in 100 ml of toluene that has been distilled from Na/K alloy under nitrogen. This solution is then added to the tungsten salts, and the whole mixture is stirred and sparged for one hour with dry nitrogen. Acetylacetone (10.00 grams, 0.10 moles) is then added by syringe and the mixture is stirred overnite while sparging with nitrogen to remove HCl gas. Toluene is then added to restore the volume of the solution to its original level and produce a 0.50 M solution.

Example 2

Preparation of aluminum alkyl activator solution.

2-Methoxyethyl ether (13.4 grams, 0.100 moles) is added to 42.4 ml of purified dicyclopentadiene in a nitrogen sparged pop bottle. Tri - n - octylaluminum (31.16 grams, 0.085 moles) is added to the solution by syringe. Di - n - octyl - aluminum iodide (5.70 grams, 0.015 moles) is then added to the solution by

6

syringe. The mixture is then thoroughly mixed under nitrogen to provide a 1.00 M solution of aluminum alkyl activator.

Examples 3—9

In each of Examples 3—9, polymerized dicyclopentadiene is made by RIM processing using a standard RIM machine. The following description illustrates the procedure for molding. First the tanks on the RIM machine are closed off and inerted with an atmosphere of dry nitrogen. The desired amount of dicyclopentadiene monomer is charged to the two tanks. The tanks are located on different sides of the RIM machine: the tank on the A side is the one to which the activator mixture is added and the tank on the B side is the one to which the catalyst solution is added. If desired, rubber may be predissolved in the dicyclopentadiene monomer. Also solid fillers are added, if desired. Sufficient 1.00 M aluminum alkyl activator solution is added to the A tank to bring the aluminum alkyl activator concentration to 0.0207 M. Sufficient 0.50 M tungsten catalyst solution is then added to the B side to bring its concentration in the monomer to 0.00690 M. All transfers are done in a way to preclude the entrance of oxygen or moisture into the system. The solutions are thoroughly blended in their respective tanks.

The mixing of the activator solution (A stream) and the catalyst solution (B stream) is accomplished using a standard impingement type RIM mixhead. The ratio of the activator/monomer solution mixed with catalyst/monomer solution is 1:1. The impingement mixing is accomplished by passing both the solutions through orifices 0.032″ in diameter at a flow rate approximately 80 ml/sec. This requires pumping pressures of approximately 1000 psi.

The resulting mixture flows directly into a mold heated between 50°C and 60°C. The mold is made out of aluminum and is chrome plated. The mold has a flat cavity which forms a plaque sample 10″×10″×1/8″ thick. A clamping force of 1.5 tons is used to keep the mold closed. The polymerized samples are removed within one minute after the mold is filled.

In Example 3 the molding procedure is followed where there is added 6 wt% styrene - butadiene rubber (Sterlon 720A. B. F. Goodrich). Various inorganic fillers are incorporated into the dicyclopentadiene polymer by adding equal amounts to both the catalyst/monomer and the activator/monomer solutions. In Example 4, samples are made containing 20% 1/16″ milled glass (OCF 737A Owens Corning Co.). These samples are made by initially slurrying the glass into both solutions of the catalyst/monomer and the activator/monomer. Otherwise, these solutions are identical to those used in Example 3. In Example 5 a composition consisting of 20 wt% Wollastonite is made by adding the filler to a formulation identical to that described in Example 3. In Example 6 the same procedure as Example 3 is followed except that 10 wt% of Hifax 1900 is added to the formulation.

In Example 7 the same procedure as Example 3 is followed except that the mold cavity is 10″×10″×1/4″ thick. In Example 8 the same procedure as Example 4 is followed except that the mold cavity is 10″×10″×1/4″ thick. In each case a solid, insoluble polymer is formed. Various data for the Examples are listed below in Table 1.

TABLE 1
Effect of filler on residual DCPD
monomer in molded plaques

| Example | Filler | Wt. percent | Plaque thickness | Residual DCPD |
|---------|--------|-------------|------------------|---------------|
| 3 | None | | 1/8″ | 1.62% |
| 4 | Milled glass | 20 | 1/8″ | 1.10% |
| 5 | Wollastonite | 20 | 1/8″ | 1.14% |
| 6 | Hi-fax 1900 | 10 | 1/8″ | 1.06% |
| 7 | None | | 1/4″ | 0.96% |
| 8 | Milled glass | 20 | 1/4″ | 0.63% |

Examples 9 and 10 show preexotherm gelation of the monomer.

Example 9 (comparative example)

A 0.1 M solution of the tungsten catalyst having a 1:1 molar ratio of $WCl_6$ to $WCl_4O$ is used. Nonyl phenol (2.21 grams, 0.01 moles) dissolved in 100 ml of toluene, that has been distilled from Na/K alloy under nitrogen, is added, and the mixture is stirred for one hour while sparging with nitrogen.

Acetylacetone (2.00 grams; 0.02 moles) is then added by syringe and the mixture is stirred overnite while sparging with nitrogen to remove HCl gas.

Polymerizations are conducted in a capped 10 ml vial that has been previously sparged with nitrogen. The vial cap has five small holes in it to accommodate a gas line for flushing with nitrogen, a tube for introducing the monomer mixture, thermocouple leads to measure the exotherm of the sample during the polymerization and the spindle of a digital Brookfield viscometer to measure the viscosity of the sample during the polymerization.

A catalyst/monomer solution is prepared by mixing under nitrogen 10.0 grams of DCPD and 0.76 ml of the 0.1 M catalyst solution. An activator/monomer solution is prepared by mixing under nitrogen 10.0 grams of DCPD, 0.63 M solution of diethylaluminum chloride in toluene, and 0.15 grams of butyl ether.

Polymerization of DCPD is accomplished by simultaneously syringing 4.0 ml each of catalyst/monomer solution and activator/monomer solution through a T-shaped tube which is connected to the sample vial. Mixing of the two solutions is accomplished by impingement of the two streams upon each other in the T-shaped tube. After a brief induction period the viscosity of the monomer increased rapidly to greater than 100,000 centipoise. After an additional period of time a sharp exotherm is observed and a solid insoluble polymer was formed. The time that elapsed until gelation, the time until the exotherm, and the total exotherm are shown in Table 21.

Example 10 (comparative example)

In this example the procedure of Example 9 is followed except that 0.20 ml of a 1.12 M solution of trioctylaluminum and methoxyethyl ether in DCPD was added in place of the diethylaluminum chloride and butyl ether to prepare the activator/monomer solution. A solid insoluble polymer is formed. The results are shown in Table 21.

Example 11

This example illustrates delaying the gelation of the monomer by using a mixture of diethylaluminum chloride and diethylaluminum iodide.

The procedure of Example 9 is followed except that 0.57 ml of a 0.36 M solution of diethylaluminum chloride in toluene and 0.054 ml of a 0.42 M solution of diethylaluminum iodide in toluene are used in place of 0.63 ml of diethylaluminum chloride to prepare the activator/monomer solution. A solid insoluble polymer is obtained. The time until gelation, the time until exotherm, and the exotherm of the sample are given in Table 2.

Example 12

This example illustrates delaying the gelation of the monomer by using a mixture of trioctylaluminum and diethylaluminum iodide.

The procedure of Example 9 is followed except that 0.47 ml of a solution that was 0.34 M is trioctylaluminum, 0.06 M in diethylaluminum iodide, and 0.40 M in methoxyethyl ether in DCPD was used in place of the diethylaluminum chloride and butyl ether to make up the activator/monomer solution. A solid insoluble polymer was obtained. The time until gellation, the time until exotherm, and the exotherm of the sample are given in Table 2.

TABLE 2

| Example | 9 | 10 | 11 | 12 |
|---|---|---|---|---|
| DCPD | 60.5 mmol | 60.5 mmol | 60.5 mmol | 60.5 mmol |
| Tungsten catalyst | .0303 mmol | .0303 mmol | .0303 mmol | .0303 mmol |
| Et$_2$AlCl | .0908 mmol | | .0818 mmol | |
| Octyl$_3$Al | | .0908 mmol | | .0644 mmol |
| Et$_2$AlI | | | .00909 mmol | .0113 mmol |
| Octyl$_2$AlI | | | | |
| Butyl ether | 0.454 mmol | | 0.454 mmol | |
| Methoxyethyl ether | | .0908 mmol | | .0756 mmol |
| Gellation time | 10 sec | 20 sec | 29 sec | 24 sec |
| Time until exotherm | 48 sec | 38 sec | 30 sec | 25 sec |
| Exotherm | 162°C | 163°C | 165°C | 164°C |

In Example 13, sufficient methoxyethyl ether is added so that the final methoxyethyl ether/aluminum ratio was 3/1. In each case, a solid insoluble cross-linked polymer is obtained. The times until gelation, the times until exotherm, and the exotherms of the samples are given in Table 3. In each case, a solid insoluble cross-linked polymer is obtained. The times until gelation, the times until exotherm, and the exotherms of the samples are given in Table 3.

Example 13

In Example 13 the procedure of Example 9 is followed except that 0.54 ml of a solution that is 0.36 M in trioctylaluminum, 0.063 M in dioctylaluminum iodide, and 0.42 M in methoxyethyl ether in toluene is used in place of the diethylaluminum chloride and the butyl ether to make up the activator/monomer solution. A solid insoluble polymer is obtained. The time until gelation, the time until exotherm, and the exotherm of the sample are given in Table 3.

TABLE 3

| | |
|---|---|
| DCPD | 60.5 mmol |
| Tungsten catalyst · | .0303 mmol |
| Et$_2$AlCl | |
| Octyl$_3$Al | .0773 mmol |
| Et$_2$AlI | |
| Octyl$_2$AlI | .0136 mmol |
| Butyl ether | |
| Methoxyethyl ether | .0909 mmol |
| Gellation time | 24 sec |
| Time until exotherm | 26 sec |
| Exotherm | 156°C |

The solid insoluble polymers formed in Examples 9—13 are substantially cross-linked having notched Izod impact strengths of at least 1.5 ft-lb/in notch; a flexural modulus of at least 150,000 psi at ambient temperature (about 70°F); and a percent gel swell determined after the polymer is immersed in toluene for two hours at 100°C of less than about 200%.

Example 14 describes an activator preparation for use in the preparation of a cellular polymer.

Example 14

The catalyst used is a 1:1 molar mixture of WCl$_6$ to WCl$_4$O as prepared herein above. An aluminum alkyl activator solution that is 1.06 M in trioctylaluminum (TNOA), 0.19 M in diethylaluminum iodide (DEAI) and 1.25 M in methoxyethyl ether is prepared by dissolving 85.0 grams of methoxyethyl ether, 196.1 grams

9

of TNOA, and 20.00 grams of diethylaluminum iodide (DEAI) in 157.3 ml of dicyclopentadiene. The molar ratio of TNOA to DEAI to methoxyethyl ether is then 0.85:0.15:1.00.

Examples 15 through 19 illustrate small scale examples where a cellular polymer of dicyclopentadiene monomer is formed using a mixture of diethylaluminum iodide and trioctylaluminum as catalyst activators where the dicyclopentadiene monomer also contains 6 weight percent styrene-butadiene rubber.

In Examples 14, 15, 19, 20 and 22, the fluorinated alkyl methacrylate copolymer surfactant used is FC-740, manufactured by Minnesota Mining and Manufacturing Company.

Example 15

A catalyst and monomer solution is prepared by mixing under nitrogen 50 grams of DCPD that had previously had 3.0 grams of styrene-butadiene rubber dissolved in it with 3.8 ml of the 0.1 M catalyst solution, 2.5 grams of trichlorofluoromethane, and 0.50 grams of fluorinated alkyl methacrylate copolymer.

An activator and monomer solution is prepared by mixing under nitrogen 50.0 grams of DCPD that has 3.0 grams of styrene-butadiene rubber dissolved in it with 1.45 ml of 1.25 M aluminum alkyl activator solution, 2.5 grams of trichlorofluoromethane, and 0.50 grams of fluorinated alkyl methacrylate copolymer.

The catalyst and monomer and activator and monomer were then combined and mixed rapidly under nitrogen. The mixture was then poured rapidly into a vented mold and allowed to polymerize into a cellular polymer.

Example 16

The procedure of Example 15 is followed except that ten per cent trichlorofluoromethane was used as the blowing agent, 0.5 percent fluorinated alkyl methacrylate copolymer surfactant was used and 1.16 ml of the aluminum alkyl activator is used to make up the activator and monomer solution.

Example 17

The procedure of Example 15 was followed except that seven per cent trichlorofluoromethane was used as the blowing agent and 1.40 ml of aluminum alkyl activator solution is used to make up the activator and monomer solution.

Example 18

The procedure of Example 15 was followed except that 1.51 ml of aluminum alkyl activator solution is used to make up the activator and monomer solution.

Example 19

The procedure of Example 16 is used except that fifteen percent methylene chloride was used as the blowing agent and 1.06 ml of aluminum alkyl activator solution is used to make up the activator and monomer solution.

Table 4 shows the polymerization mixtures from which foam products are formed in Examples 14—19.

### TABLE 4
#### Foam examples

| | Example 15 | Example 16 | Example 17 | Example 18 | Example 19 |
|---|---|---|---|---|---|
| DCPD (grams) | 100 | 100 | 100 | 100 | 100 |
| Tungsten catalyst mmol | .756 | .756 | .756 | .756 | .756 |
| Diethylaluminum diodide (mmol) | .272 | .218 | .262 | .280 | .198 |
| Trioctyl aluminum (mmol) | 1.54 | 1.234 | 1.49 | 1.61 | 1.12 |
| Methoxyethyl ether (mmol) | 1.81 | 1.452 | 1.75 | 1.89 | 1.32 |
| Blowing agent<br>Weight per cent | CFC13<br>5 | CFC13<br>10 | CFC13<br>7 | CFC13<br>5 | CH2C12<br>15 |
| Rubber (elastomer)<br>Weight per cent | SBR<br>6 | SBR<br>6 | SBR<br>6 | SBR<br>6 | SBR<br>6 |
| Surfactant<br>Weight per cent | FC-740<br>1.0 | FC-740<br>0.5 | FC-740<br>1.0 | FC-740<br>1.0 | FC-740<br>0.5 |
| Density (g/cc) | 0.30 | 0.13 | 0.21 | 0.39 | 0.18 |

EP 0 181 641 B1

Example 20

This example illustrates a preferred embodiment of the synthesis of a cellular cross-linked polymerized dicyclopentadiene via reaction injection molding where the catalyst system is activated by a mixture of trioctylaluminum (TNOA) and diethylaluminum iodide (DEAI).

Into two tanks, which have previously been closed and inerted with nitrogen, having a capacity of two gallons each is charged DCPD containing 6% by weight of a random styrene - butadiene rubber. Sufficient $WCl_6$/nonylphenol/acetylacetone catalyst, having a ratio of 1:1:2, in xylene is added to one of the tanks to provide a DCPD:tungsten catalyst ratio of 1000:1. Next, to the other tank is added sufficient trioctylaluminum:diethylaluminum iodide:methoxyethyl ether solution, having a molar ratio of 0.85:0.15:1.0 to provide a DCPD:aluminum ratio of 1000:2.4. Fluorinated alkyl methacrylate copolymer surfactant is added to each tank to achieve a concentration of 0.5 parts per hundred, based on the weight of DCPD. Methylene chloride is then added to each tank to achieve a concentration of 5.0 parts per hundred, based on the weight of DCPD. All transfers are done in a way to preclude the entrance of oxygen or moisture into the system. The materials are then thoroughly blended in their respective tanks.

The components of the two tanks are combined in a standard impingement type RIM mixhead. The ratio of the activator/monomer solution mixed with the catalyst and monomer solution is 1:1. The impingement mixing is accomplished by passing both of the solutions through orifices 0.032 inch in diameter at a flow rate of approximately 80 ml/sec. This requires pumping pressure of approximately 500 psi to 1000 psi.

The resulting mixture flows directly into a mold heated to between 35°C. and 70°C. The mold is made out of chrome plated aluminum. The mold has a flat cavity which forms a plaque sample 8 inch×8 inch×3/8 inch thick. The reactants polymerize rapidly in the closed mold, reaction being substantially complete in about one minute or less. The mold is opened and a cellular cross-linked poly DCPD is recovered having a density of 0.55 grams/cc.

Example 21

A catalyst and monomer solution is prepared by mixing under nitrogen 400 grams of DCPD, 30.7 ml of 0.1 M tungsten catalyst solution, 2 grams of silica, and 57 grams of trichlorofluoromethane.

An activator and monomer solution is prepared by mixing under nitrogen 390 grams of DCPD, 39 grams of styrene - butadiene rubber, 5.49 ml of a 0.825 M solution of DEAC in DCPD, 15.5 ml of a 0.450 M solution of DEAI in DCPD, and 56 grams of trichlorofluoromethane.

171.4 grams of catalyst and monomer solution and 188.6 grams of activator and monomer solution were then combined and mixed under nitrogen and poured into a mold. After about one minute the mixture starts to polymerize and expand into a cellular cross-linked polymer. The final density of the foam is 0.034 grams/cc.

The silica used in this Example is Cab-o-sil EH-5, manufactured by Cabot Corp.

Example 22

A catalyst and monomer mixture is prepared by mixing under nitrogen 100 grams of DCPD, 10 grams of SDP-760 polyethylene powder (SDP-760 from Arco Chemical, 10 grams of methylene chloride, 0.50 grams of fluorinated alkyl methacrylate copolymer surfactant, and 7.56 ml of 0.1 M tungsten catalyst solution.

An activator and monomer solution is prepared by mixing under nitrogen 100 grams of DCPD, 10 grams of styrene - butadiene rubber, 10 grams of methylene chloride, 0.50 grams of fluorinated alkyl methacrylate copolymer surfactant, 2.8 ml of a 0.825 M solution of DEAC in DCPD, 0.53 ml of a 0.450 M solution of DEAI in DCPD, and 0.70 grams of butyl ether.

The activator and monomer solution and the catalyst and monomer mixture are mixed at 40°C. and poured rapidly into a 3 inch×4 inch×9 inch mold at 45°C. where the mixture polymerizes into a cellular polymer having a density of 0.13 grams/cc.

**Claims**

1. A process for polymerizing norbornene-type cycloolefin monomer in a reactive composition containing a monomer-soluble or solvent-soluble tungsten compound as the catalyst and a dialkylaluminum iodide as the activator of a metathesis - catalyst system, characterized in that the activator comprises two-parts, namely, a trialkylaluminum compound or a dialkylaluminum chloride as the first part, and a dialkylaluminum iodide as the second part, whereby polymer chain formation is selectively promoted until the exothermic heat of polymerization causes cross-linking to proceed.

2. A process for polymerizing cycloolefin monomer as claimed in claim 1 further characterized in that the dialkylaluminum iodide is dioctylaluminum iodide.

3. A process for polymerizing cycloolefin monomer as claimed in claim 2 further characterized in that the first part of the two-part activator is trioctylaluminum.

4. A process for polymerizing cycloolefin monomer as claimed in claim 2 further characterized in that the first part of the two-part activator is dioctylaluminum chloride.

5. A process for polymerizing cycloolefin monomer as claimed in claim 3 or 4 further characterized in that the molar ratio of alkylaluminum, based on the total aluminum content of the two-part activator, to tungsten is from about 2:1 to 4:1.

6. A process for polymerizing cycloolefin monomer as claimed in claim 5 further characterized in that more than 98.5 percent of the cycloolefin is polymerized, whereby the product contains less than 1.5 percent of residual monomer.

7. A process for polymerizing cycloolefin monomer as claimed in claim 2 further characterized in that the first part of the two-part activator is diethylaluminum chloride.

8. A process for polymerizing norbornene-type cycloolefin monomer as claimed in claim 5, characterized in that the molar ratio of alkylaluminum, based on the total aluminum content, to tungsten is from about of 2:1 to about 2.75:1.

9. A process for polymerizing cycloolefin monomer as claimed in claim 7 or 8 further characterized in that more than 99.7 percent of the cycloolefin is polymerized, whereby the product contains less than 0.3 percent of residual monomer.

10. A process for polymerizing cycloolefin monomer as claimed in claim 5 or 8 further characterized in that the temperature of polymerization is lowered by including in the reactive composition 10 to 20% by weight of particles not over 3.2 mm in size of a heat-sink material that is substantially inert to the polymerization of the cycloolefin and absorbs the exothermic heat of polymerization, whereby more than 98.5 percent of the cycloolefin is polymerized and the amount of residual monomer is between 0.5 and 1.5 percent by weight.

11. A process for polymerizing cycloolefin monomer as claimed in claim 10 further characterized in that the heat-sink material is milled glass fibers that are about 1.6 mm to about 3.2 mm in length, Wollastonite particles that are 0.0035 mm by 0.07 mm in size, or particles of high-molecular-weight polyethylene that are about 3.2 mm in size.

12. A reactive composition containing norbornene-type cycloolefin monomer in a metathesis-catalyst system including a monomer-soluble or solvent-soluble tungsten compound as the catalyst and a dialkylaluminum iodide as the activator, characterized in that the activator comprises two parts, namely, a trialkylaluminum compound or a dialkylaluminum chloride as the first part, and a dialkylaluminum iodide as the second part, whereby polymer chain formation is selectively promoted until the exothermic heat of polymerization causes cross-linking to proceed.

13. A reactive composition as claimed in claim 11 further characterized in that the dialkylaluminum iodide is dioctylaluminum iodide.

14. A reactive composition as claimed in claim 12 further characterized in that the first part of the two-part activator is trioctylaluminum.

15. A reactive composition as claimed in claim 12 further characterized in that the first part of the two-part activator is dioctylaluminum chloride.

16. A reactive composition as claimed in claim 13 or 14 further characterized in that the molar ratio of alkylaluminum, based on the total aluminum content of the two-part activator, to tungsten is from about 2:1 to 4:1.

17. A reactive composition as claimed in claim 12 further characterized in that the first part of the two-part activator is diethylaluminum chloride.

18. A reactive composition as claimed in claim 15 or 17 further characterized in that it contains 10 to 20% by weight of particles not over 3.2 mm in size of a heat-sink material that is substantially inert to the polymerization of the cycloolefin and absorbs the exothermic heat of polymerization.

19. A reactive composition as claimed in claim 17 further characterized in that the heat-sink material is milled glass fibers that are about 1.6 mm to about 3.2 mm in length, Wollastonite particles that are 0.0035 mm by 0.07 mm in size, or particles of high-molecular-weight polyethylene that are about 3.2 mm in size.

**Patentansprüche**

1. Verfahren zur Polymerisation eines Cycloolefinmonomers vom Norbornen-Typ in einer reaktiven Zusammensetzung enthaltend eine Monomer-lösliche oder Lösungsmittellösliche Wolframverbindung als Katalysator und ein Dialkylaluminiumiodid als Aktivator eines Metathese - Katalysator - Systems, dadurch gekennzeichnet, daß der Aktivator zwei Teile umfaßt, nämlich eine Trialkylaluminium - Verbindung oder ein Dialkylaluminiumchlorid als ersten Teil und ein Dialkylaluminiumiodid als zweiten Teil, wobei die Bildung der Polymerkette selektiv bewirkt wird bis die exotherme Hitze der Polymerisation Quervernetzung verursacht.

2. Verfahren zur Polymerisation eines Cycloolefinmonomers nach Anspruch 1, weiter dadurch gekennzeichnet, daß das Dialkylaluminiumiodid Dioctylaluminiumiodid ist.

3. Verfahren zur Polymerisation eines Cycloolefinmonomers nach Anspruch 2, weiter dadurch gekennzeichnet, daß der erste Teil des zweiteiligen Aktivators Trioctylaluminium ist.

4. Verfahren zur Polymerisation eines Cycloolefinmonomers nach Anspruch 2, weiter dadurch gekennzeichnet, daß der erste Teil des zweiteiligen Aktivators Dioctylaluminiumchlorid ist.

5. Verfahren zur Polymerisation eines Cycloolefinmonomers nach Anspruch 3 oder 4, weiter dadurch gekennzeichnet, daß das molare Verhältnis von Alkylaluminium, bezogen auf den Gesamtaluminiumgehalt des zweiteiligen Aktivators, zu Wolfram von etwa 2:1 bis 4:1 beträgt.

6. Verfahren zur Polymerisation eines Cycloolefinmonomers nach Anspruch 5, weiter dadurch gekennzeichnet, daß mehr als 98,5 Prozent des Cycloolefins polymerisiert werden, wobei das Produkt weniger als 1,5 Prozent Restmonomer enthält.

7. Verfahren zur Polymerisation eines Cycloolefinmonomers nach Anspruch 2, weiter dadurch gekennzeichnet, daß der erste Teil des zweiteiligen Aktivators Diethylaluminiumchlorid ist.

8. Verfahren zur Polymerisation eines Cycloolefinmonomers vom Norbornen-Typ nach Anspruch 5, dadurch gekennzeichnet, daß das molare Verhältnis von Alkylaluminium, bezogen auf den Geamtaluminiumgehalt, zu Wolfram von etwa 2:1 bis etwa 2,75:1 beträgt.

9. Verfahren zur Polymerisation eines Cycloolefinmonomers nach Anspruch 7 oder 8, weiter dadurch gekennzeichnet, daß mehr als 99,7 Prozent des Cycloolefins polymerisiert werden, wobei das Produkt weniger als 0,3 Prozent Restmonomer enthält.

10. Verfahren zur Polymerisation eines Cycloolefinmonomers nach Anspruch 5 oder 8, weiter dadurch gekennzeichnet, daß die Polymerisationstemperatur erniedrigt wird, indem man zu der reaktiven Zusammensetzung 10 bis 20 Gew.-% Teilchen einer Größe nicht über 3,2 mm eines Hitze-senkenden Materials, das im wesentlichen zu der Polymerisation des Cycloolefins inert ist und die exotherme Hitze der Polymerisation absorbiert, hinzufügt, wobei mehr als 98,5 Prozent des Cycloolefins polymerisiert werden und die Menge des Restmonomers zwischen 0,5 und 1,5 Gew.-% liegt.

11. Verfahren zur Polymerisation eines Cycloolefinmonomers nach Anspruch 10, weiter dadurch gekennzeichnet, daß das Hitze-senkende Material gemahlene Glasfasern in einer Länge von etwa 1,6 mm bis etwa 3,2 mm, Wollastonit - Teilchen einer Größe von 0,0035 mm auf 0,07 mm oder Polyethylen - Teilchen von hohem Molekulargewicht einer Größe von 3,2 mm ist.

12. Reaktive Zusammensetzung enthaltend ein Cycloolefinmonomer vom Norbornen-Typ in einem Metathese - Katalysator - System enthaltend ein Monomer-lösliche oder Lösungsmittel - lösliche Wolframverbindung als Katalysator und ein Dialkylaluminiumiodid als Aktivator, dadurch gekennzeichnet, daß der Aktivator zwei Teile umfaßt, nämlich eine Trialkylaluminium - Verbindung oder ein Dialkylaluminiumchlorid als ersten Teil und ein Dialkylaluminiumiodid als zweiten Teil, wobei die Bildung der Polymerkette selektiv bewirkt wird, bis die exotherme Hitze der Polymerisation Quervernetzung verursacht.

13. Reaktive Zusammensetzung nach Anspruch 11, weiter dadurch gekennzeichnet, daß das Dialkylaluminiumiodid Dioctylaluminiumiodid ist.

14. Reaktive Zusammensetzung nach Anspruch 12, weiter dadurch gekennzeichnet, daß der ersten Teil des zweiteiligen Aktivators Trioctylaluminium ist.

15. Reaktive Zusammensetzung nach Anspruch 12, weiter dadurch gekennzeichnet, daß der erste Teil des zweiteiligen Aktivators Dioctylaluminiumchlorid ist.

16. Reaktiv Zusammensetzung nach Anspruch 13 oder 14, weiter dadurch gekennzeichnet, daß das molare Verhältnis von Alkylaluminium, bezogen auf den Gesamtaluminiumgehalt des zweiteiligen Aktivators, zu Wolfram von etwa 2:1 bis 4:1 beträgt.

17. Reaktive Zusammensetzung nach Anspruch 12, weiter dadurch gekennzeichnet, daß der erste Teil des zweiteiligen Aktivators Diethylaluminiumchlorid ist.

18. Reaktive Zusammensetzung nach Anspruch 15 oder 17, weiter dadurch gekennzeichnet, daß sie 10 bis 20 Gew.-% Teilchen einer Größe nicht über 3,2 mm eines Hitze-senkenden Materials enthält, das im wesentlichen zu der Polymerisation des Cycloolefins inert ist und die exotherme Hitze der Polymerisation absorbiert.

19. Reaktive Zusammensetzung nach Anspruch 17, weiter dadurch gekennzeichnet, daß das Hitze-senkende Material gemahlene Glasfasern einer Länge von etwa 1,6 mm bis etwa 3,2 mm Wollastonit - Teilchen einer Größe von 0,0035 mm auf 0,07 mm oder Polyethylenteilchen von hohem Molekulargewicht einer Größe von etwa 3,2 mm ist.

**Revendications**

1. Procédé de polymérisation d'une cyclooléfine monomère du type norbornène, dans une composition réactive contenant en tant que catalyseur un composé du tungstène soluble dans le monomère ou soluble dans un solvant, et, en tant qu'activateur d'un système catalyseur de métathèse, un iodure de dialkylaluminium, caractérisé en ce que l'activateur comprend deux parties, à savoir comme première partie un composé de trialkylaluminium ou un chlorure de dialkylaluminium, et, comme deuxième partie, un iodure de dialkylaluminium, la formation de la chaîne polymère étant sélectivement provoquée jusqu'à ce que la chaleur exothermique de polymérisation provoque une réticulation.

2. Procédé de polymérisation d'une cyclooléfine monomère selon la revendication 1, caractérisé en outre en ce que l'iodure de dialkylaluminium est l'iodure de dioctylaluminium.

3. Procédé de polymérisation d'une cyclooléfine monomère selon la revendication 2, caractérisé en outre en ce que la première partie de l'activateur en deux parties est le trioctylaluminium.

4. Procédé de polymérisation d'une cyclooléfine monomère selon la revendication 2, caractérisé en outre en ce que la première partie de l'activateur en deux parties est le chlorure de dioctylaluminium.

5. Procédé de polymérisation d'une cyclooléfine monomère selon la revendication 3 ou 4, caractérisé en outre en ce que le rapport en moles de l'alkylaluminium, sur la base de la teneur totale en aluminium de l'activateur en deux parties, au tungstène est compris entre environ 2:1 et 4:1.

6. Procédé de polymérisation d'une cyclooléfine monomère selon la revendication 5, caractérisé en outre en ce que plus de 98,5% de la cyclooléfine sont polymérisés, le produit contenant moins de 1,5% de monomère résiduel.

7. Procédé de polymérisation d'une cyclooléfine monomère selon la revendication 2, caractérisé en outre en ce que la première partie de l'activateur en deux parties est le chlorure de diéthylaluminium.

8. Procédé de polymérisation d'une cyclooléfine monomère du type norbornène selon la revendication 5, caractérisé en ce que le rapport en moles de l'alkylaluminium, sur la base de la teneur totale en aluminium, au tungstène est compris entre environ 2:1 et environ 2,75:1.

9. Procédé de polymérisation d'une cyclooléfine monomère selon la revendication 7 ou 8, caractérisé en outre en ce que plus de 99,7% de la cyclooléfine sont polymérisés, le produit contenant moins de 0,3% de monomère résiduel.

10. Procédé de polymérisation d'une cyclooléfine monomère selon la revendication 5 ou 8, caractérisé en outre en ce que la température de polymérisation est abaissée par inclusion, dans la composition réactive, de 10 à 20% en poids de particules, de granulométrie non supérieure à 3,2 mm, d'un matériau dissipateur de chaleur qui soit pratiquement inerte vis-à-vis de la polymérisation de la cyclooléfine et absorbe la chaleur exothermique de polymérisation, plus de 98,5% de la cyclooléfine étant polymérisés, et la quantité de monomère résiduel étant comprise entre 0,5 et 1,5% en poids.

11. Procédé de polymérisation d'une cyclooléfine monomère selon la revendication 10, caractérisé en outre en ce que le matériau dissipateur de chaleur est constitué de fibres de verre broyées ayant une longueur d'environ 1,6 à environ 3,2 mm, de particules de Wollastonite de granulométrie comprise entre 0,0035 mm et 0,07 mm, ou de particules de polyéthylène à masse moléculaire élevée, de granulométrie environ 3,2 mm.

12. Composition réactive contenant une cyclooléfine monomère du type norbornène, dans une composition réactive contenant en tant que catalyseur un composé du tungstène soluble dans le monomère ou soluble dans un solvant, et, en tant qu'activateur d'un système catalyseur de métathèse, un iodure de dialkylaluminium, caractérisé en ce que l'activateur comprend deux parties, à savoir comme première partie un composé de trialkylaluminium ou un chlorure de dialkylaluminium, et, comme deuxième partie, un iodure de dialkylaluminium, la formation de la chaîne polymère étant sélectivement provoquée jusqu'à ce que la chaleur exothermique de polymérisation provoque une réticulation.

13. Composition réactive selon la revendication 11, caractérisée en outre en ce que l'iodure de dialkylaluminium est l'iodure de dioctylaluminium.

14. Composition réactive selon la revendication 12, caractérisée en outre en ce que la première partie de l'activateur en deux parties est le trioctylaluminium.

15. Composition réactive selon la revendication 12, caractérisée en outre en ce que la première partie de l'activateur en deux parties est le chlorure de dioctylaluminium.

16. Composition réactive selon la revendication 13 ou 14, caractérisée en outre en ce que le rapport en moles de l'alkylaluminium, sur la base de la teneur totale en aluminium de l'activateur en deux parties, au tungstène est compris entre environ 2:1 et 4:1.

17. Composition réactive selon la revendication 12, caractérisée en outre en ce que la première partie de l'activateur en deux parties est le chlorure de diéthylaluminium.

18. Composition réactive selon la revendication 15 ou 17, caractérisée en ce qu'elle contient en outre de 10 à 20% en poids de particules de granulométrie non supérieure à 3,2 mm d'un matériau dissipateur de chaleur qui soit pratiquement inerte vis-à-vis de la polymérisation de la cyclooléfine et absorbe la chaleur exothermique de polymérisation.

19. Composition réactive selon la revendication 17, caractérisée en outre en ce que le matériau dissipateur de chaleur est constitué de fibres de verre broyées ayant une longueur d'environ 1,6 à environ 3,2 mm, de particules de Wollastonite de granulométrie comprise entre 0,0035 mm et 0,07 mm, ou de particules de polyéthylène à masse moléculaire élevée, de granulométrie environ 3,2 mm.